(19) Europäisches Patentamt
European Patent Office
Office européen des brevets

(11) EP 2 913 880 B1

(12) **EUROPEAN PATENT SPECIFICATION**

(45) Date of publication and mention of the grant of the patent: **10.01.2018 Bulletin 2018/02**

(21) Application number: **13852255.2**

(22) Date of filing: **18.03.2013**

(51) Int Cl.:
***H01M 10/0567*** *(2010.01)* ***H01M 10/052*** *(2010.01)*
***H01M 4/505*** *(2010.01)* ***H01M 4/525*** *(2010.01)*
*H01M 4/587* *(2010.01)* *H01M 4/02* *(2006.01)*

(86) International application number:
**PCT/JP2013/001820**

(87) International publication number:
**WO 2014/068805 (08.05.2014 Gazette 2014/19)**

# (54) NONAQUEOUS ELECTROLYTE SECONDARY BATTERY AND METHOD FOR MANUFACTURING NONAQUEOUS ELECTROLYTE SECONDARY BATTERY

BATTERIE MIT NICHTWÄSSRIGEM ELEKTROLYT UND VERFAHREN ZUR HERSTELLUNG DER BATTERIE MIT NICHTWÄSSRIGEM ELEKTROLYT

BATTERIE RECHARGEABLE À ÉLECTROLYTE NON AQUEUX ET MÉTHODE DE FABRICATION DE BATTERIE RECHARGEABLE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2012 JP 2012238279**

(43) Date of publication of application:
**02.09.2015 Bulletin 2015/36**

(73) Proprietor: **GS Yuasa International Ltd.**
**Kisshoin, Minami-ku,**
**Kyoto-shi, Kyoto 601-8520 (JP)**

(72) Inventors:
- **NISHIE, Katsushi**
  **Kyoto-shi**
  **Kyoto 601-8520 (JP)**
- **KAWASOE, Yudai**
  **Kyoto-shi**
  **Kyoto 601-8520 (JP)**
- **HACHIDA, Takeshi**
  **Kyoto-shi**
  **Kyoto 601-8520 (JP)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
**EP-A1- 1 391 950** **EP-A1- 2 905 836**
**WO-A1-2012/053644** **WO-A1-2012/053644**
**JP-A- 2002 033 119** **JP-A- 2009 104 838**
**JP-A- 2010 218 982** **JP-A- 2011 086 632**
**US-A1- 2002 039 677** **US-A1- 2005 271 944**
**US-A1- 2010 018 034**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 913 880 B1

## Description

TECHNICAL FIELD

The present invention relates to a nonaqueous electrolyte secondary battery and a method for producing a nonaqueous electrolyte secondary battery.

BACKGROUND ART

Heretofore, a lithium ion secondary battery including an electrolyte containing a lithium salt has been known as a nonaqueous electrolyte secondary battery. Specifically, nonaqueous electrolyte secondary batteries, in which a positive active material contains a lithium-containing transition metal oxide such as $LiCoO_2$ or $LiMnO_2$, and an electrolyte contains a cyclic sulfate compound such as 4,4'-bi-1,3,2-dioxathiolane 2,2,2',2'-tetraoxide, are known (Patent Document 1).

In some examples of Patent Document 1 is described a nonaqueous electrolyte secondary battery in which the positive active material contains the above-mentioned lithium-containing transition metal oxide, and the electrolyte contains the above-mentioned cyclic sulfate compound. However, the nonaqueous electrolyte secondary battery described in the examples of Patent Document 1 has a problem that, for example, when the battery is used at 60°C, and the battery is left in a state of low charge under a relatively high temperature environment, the direct-current resistance at low temperatures such as a temperature below zero is significantly increased in comparison with that before the battery is left.

PRIOR ART DOCUMENT

PATENT DOCUMENT

Patent Document 1: WO2012/053644 A. EP1391950 discloses a nonaqueous electrolyte secondary battery according to the preamble of claim 1.

SUMMARY OF THE INVENTION

PROBLEM TO BE SOLVED BY THE INVENTION

In view of the above-mentioned problem, it is an object of the present invention to provide a nonaqueous electrolyte secondary battery which is suppressed in an increase of the direct-current resistance after being left in a state of low charge under a relatively high temperature environment.

MEANS FOR SOLVING THE PROBLEM

In order to solve the above-mentioned problem, the nonaqueous electrolyte secondary battery according to the present invention includes a positive electrode having a positive active material, and an electrolyte, and is characterized in that the positive active material contains a nickel-containing lithium transition metal oxide and has an average particle size of 3 to 15 μm, and the electrolyte contains a cyclic sulfate compound represented by the following general formula (1):

[Chem. 1]

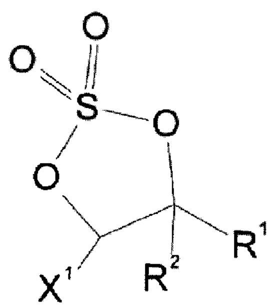

General Formula (1)

[Chem. 2]

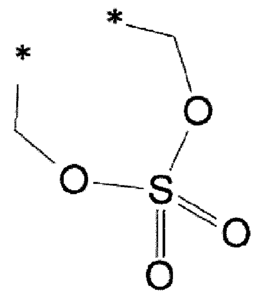

Formula (2)

[Chem. 3]

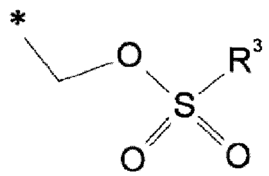

General Formula (3)

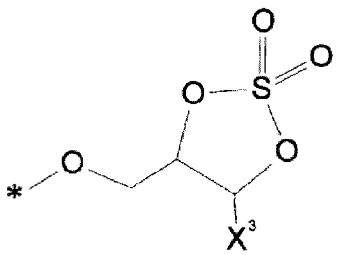

General Formula (5)

wherein $R^1$ and $R^2$ in the general formula (1) respectively represent groups represented by the formula (2) that are linked with each other, or either of $R^1$ and $R^2$ represents a hydrogen atom and the other represents a group represented by the general formula (3), or the general formula (5);

in the general formula (3), $R^3$ represents a group represented by the general formula (5); portions of symbol * in the formula (2), the general formula (3), the general formula (4) and the general formula (5) represent a bonding position; and

$X^1$, $X^2$, and $X^3$ in the general formula (1), the general formula (4) and the general formula (5) each independently represent a hydrogen atom or a halogen element.

In the nonaqueous electrolyte secondary battery according to the present invention, the nickel-containing lithium transition metal oxide preferably contains cobalt and manganese.

In the nonaqueous electrolyte secondary battery according to the present invention, the nickel content in the nickel-containing lithium transition metal oxide is preferably 50% by mole or less with respect to all the transition metals.

In the nonaqueous electrolyte secondary battery according to the present invention, the electrolyte preferably contains at least one cyclic sulfate compound selected from the group consisting of the following formula (7), and formula (9):

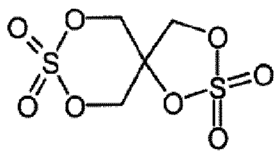

Formula (7)

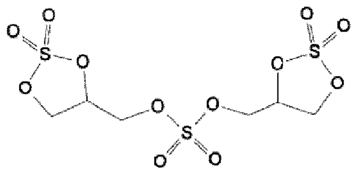

Formula (9)

ADVANTAGES OF THE INVENTION

The nonaqueous electrolyte secondary battery according to the present invention exerts an effect of suppressing an increase of the direct-current resistance after being left in a state of low charge under a relatively high temperature environment.

MODE FOR CARRYING OUT THE INVENTION

Hereinafter, an embodiment of the nonaqueous electrolyte secondary battery of the present invention will be described. Here, the present invention is not limited to the nonaqueous electrolyte secondary battery exemplified below, and various types of commonly used nonaqueous electrolyte secondary batteries can be employed as long as the effect of the present invention is not impaired.

A nonaqueous electrolyte secondary battery of the present embodiment includes a positive electrode having a positive active material, and an electrolyte. The positive active material contains a nickel-containing lithium transition metal oxide and has an average particle size of 3 to 15 μm, and the electrolyte contains a cyclic sulfate compound represented by the following general formula (1). Moreover, the nonaqueous electrolyte secondary battery of the present embodiment includes a negative electrode having a negative active material.

[Chem. 7]

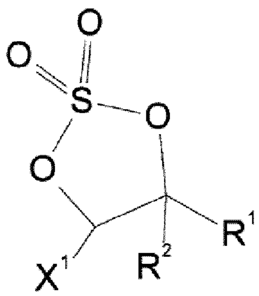

General Formula (1)

[Chem. 8]

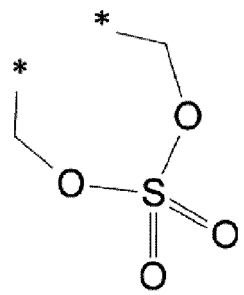

Formula (2)

[Chem. 9]

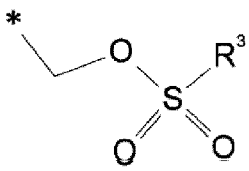

General Formula (3)

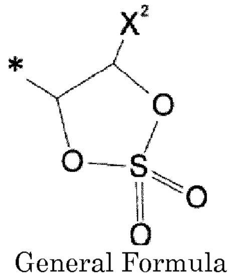

General Formula (4)

[Chem. 10]

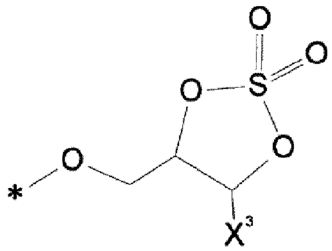

General Formula (5)

wherein $R^1$ and $R^2$ in the general formula (1) respectively represent groups represented by the formula (2) that are linked with each other, or either of $R^1$ and $R^2$ represents a hydrogen atom and the other represents a group represented by the general formula (3), the general formula (4) or the general formula (5);
in the general formula (3), $R^3$ represents an alkyl group having 1 to 3 carbon atoms, which is optionally substituted with a halogen element, or a group represented by the general formula (5); portions of symbol * in the formula (2), the general formula (3), the general formula (4) and the general formula (5) represent a bonding position; and
$X^1$, $X^2$, and $X^3$ in the general formula (1), the general formula (4) and the general formula (5) each independently represent a hydrogen atom or a halogen element. It is noted that chemical formula 4 and the case in which R3 represents an alkyl group having 1 to 3 carbon atoms is not part of the invention.

The electrolyte contains at least the cyclic sulfate compound represented by the general formula (1). Further, the electrolyte usually further contains a nonaqueous solvent and an electrolyte salt. Specific examples of the cyclic sulfate compound represented by the general formula (1) include compounds represented by the following formulae (6) to (9). The electrolyte preferably contains at least one cyclic sulfate compound selected from the group consisting of the formula (6), the formula (7), the formula (8) and the formula (9). It is noted that formulae 6 and 8 are not part of the invention.

[Chem. 11]

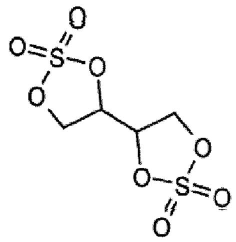

Formula (6)

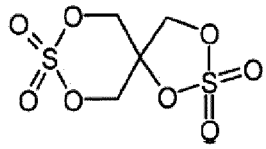

Formula (7)

[Chem. 12]

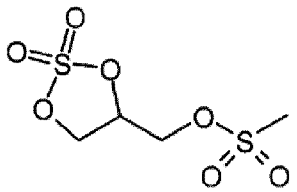

Formula (8)

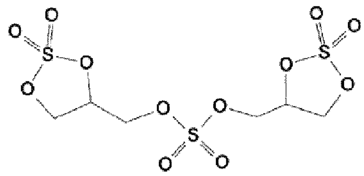

Formula (9)

In the nonaqueous electrolyte secondary battery of the present invention, since the positive electrode contains the nickel-containing lithium transition metal oxide, and the electrolyte contains the cyclic sulfate compound of the general formula (1), it is possible to suppress an increase of internal resistance particularly at low temperatures when the battery is left in a state of low charge under a relatively high temperature environment. Therefore, input-output characteristics of the battery at low temperatures can be improved. The mechanism of suppression of an increase of internal resistance by the above-mentioned constitution is not clear; however, it is thought that a reaction between the positive active material and the cyclic sulfate compound moderately occurs at an initial stage of use of the battery (use immediately after the preparation of the battery), and therefore a stable and thin protective film is formed on the particle surface of the positive active material. Since the transition metal contained in the positive active material has a catalytic action on the formation of the protective film, it is thought that a particularly robust protective film is formed when the positive active material contains nickel. Since the protective film is robust even under a relatively high temperature environment, it is thought to be possible to suppress the formation of a substance inhibiting an insertion/extraction reaction of lithium ions on the particle surface of the positive active material under a relatively high temperature environment. Accordingly, an increase of internal resistance of a battery is thought to be suppressed. Moreover, it is possible to moderately react the cyclic sulfate compound with the positive active material by adjusting the average particle size of the positive active material to 3 to 15 $\mu$m.

The electrolyte contains the cyclic sulfate compound represented by the general formula (1) preferably in an amount of 0.1% by mass or more, more preferably in an amount of 0.2% by mass or more, and further preferably in an amount of 1.0% by mass or more with respect to the total mass of the electrolyte. When the electrolyte contains the cyclic sulfate compound represented by the general formula (1) in an amount of 0.1% by mass or more, there is an advantage that an increase of the direct-current resistance of a battery after being left in a state of low charge under a relatively high temperature environment is suppressed more greatly. Further, the electrolyte contains the cyclic sulfate compound represented by the general formula (1) preferably in an amount of 3.0% by mass or less, and more preferably in an amount of 2.0% by mass or less with respect to the total mass of the electrolyte. When the electrolyte contains the cyclic sulfate compound represented by the general formula (1) in an amount of 3.0% by mass or less, there is an advantage that an increase of the direct-current resistance of a battery after being left in a state of low charge under a relatively high temperature environment is suppressed more greatly. Further, the cyclic sulfate compound represented by the general formula (1) is consumed by formation of the protective film. Therefore, it has been confirmed that the content of the cyclic sulfate compound represented by the general formula (1) in the nonaqueous electrolyte of a battery after being charged and discharged is significantly decreased.

Examples of the nonaqueous solvent include cyclic carbonates, chain carbonates and the like. Examples of the cyclic carbonates include propylene carbonate, ethylene carbonate and the like. Examples of the chain carbonates include dimethyl carbonate, diethyl carbonate, ethylmethyl carbonate and the like. Moreover, examples of the nonaqueous solvent include vinylene carbonate, sultone and derivatives thereof, and the like. As the nonaqueous solvent, the above-mentioned compounds may be used singly, or may be used as a mixture of two or more thereof, but the nonaqueous solvent is not limited to these.

Examples of the electrolyte salt include lithium salts such as $LiClO_4$, $LiBF_4$, $LiPF_6$, and $LiN(SO_2CF_3)_2$. As the electrolyte salt, the above-mentioned compounds may be used singly, or may be used as a mixture of two or more thereof, but the electrolyte salt is not limited to these. In addition, the concentration of the electrolyte salt in the electrolyte is preferably 0.5 to 5.0 mol/L, and more preferably 1.0 to 2.5 mol/L in order to reliably obtain a nonaqueous electrolyte battery having excellent battery characteristics.

The positive electrode and the negative electrode in the nonaqueous electrolyte secondary battery of the present embodiment respectively include a current collector formed into a sheet-shape and composite layers disposed on both surfaces of the current collector. Each composite layer includes at least a positive active material or a negative active material, and further includes a conducting agent, a binder, a thickener, a filler and the like as required.

Examples of the material of the current collector include metals such as aluminum and copper, conductive polymers and conductive glass. The current collector may be formed into a sheet-shape or a net-shape. As the current collector of the positive electrode, an aluminum or aluminum alloy sheet is preferably used. As the current collector of the negative electrode, a copper or copper alloy sheet is preferably used.

The positive active material contains a nickel-containing lithium transition metal oxide. The nickel-containing lithium transition metal oxide is a metal oxide containing lithium and nickel as metals, and may contain metals other than nickel. Further, the nickel-containing lithium transition metal oxide can have any crystal structure such as a rock salt structure, a spinel structure, a reverse spinel structure or an olivine structure, but it particularly preferably has a rock salt crystal structure from the viewpoint of theoretical capacity. That is, as the nickel-containing lithium transition metal oxide, it is preferred to use $Li_pNi_qM_rO_2$ ($0.8 < p < 1.2$, $0.8 \leq q + r \leq 1.2$, M is a transition metal other than Ni, a metal selected from the group consisting of Al, Ti, Mg, Cr, Zn, W, Zr and Nb).

The positive active material is prepared by a common synthesis method. That is, a solid phase reaction method, a hydrothermal synthesis method, or a coprecipitation method is used. Further, the average particle size of the positive active material is adjusted by pulverizing the positive active material by a common method, and classifying the particles by using a screen or the like. The average particle size of the positive active material in the present invention is 3 to 15 μm. In this range of the average particle size, an increase of the direct-current resistance of a battery after the battery is left in a state of low charge under a relatively high temperature environment is suppressed.

When a nickel-containing lithium transition metal oxide containing cobalt and manganese as transition metals in addition to nickel is used as the nickel-containing lithium transition metal oxide, it is preferred since an increase of the direct-current resistance of a battery after the battery is left in a state of low charge under a relatively high temperature environment is suppressed more greatly. When a positive electrode having a nickel content in the nickel-containing lithium transition metal oxide of more than 10% by mole and 50% by mole or less with respect to all the transition metals is used, it is preferred since an increase of the direct-current resistance of a battery after the battery is left in a state of low charge under a relatively high temperature environment is suppressed more greatly. That is, as the nickel-containing lithium transition metal oxide, it is preferred to use $Li_xMn_aNi_bCo_cM_dO_2$ ($0.8 < x < 1.2$, $0 \leq d < 0.1$, $0.8 \leq a + b + c + d \leq 1.2$, and M is a metal selected from the group consisting of Al, Ti, Mg, Cr, Zn, W, Zr and Nb), and it is particularly preferred that $0.1 < b \leq 0.5$ is satisfied. Further, it is conceivable that the state of the produced protective film varies depending on the abundance ratio between nickel and cobalt contained in the positive active material. That is, when the abundance ratio between nickel and cobalt contained in the positive active material falls within the range of Ni/Co = 0.25 to 1 in molar ratio, it is expected that a more suitable protective film is formed and an increase of internal resistance can be further suppressed.

The positive active material may contain a compound other than the nickel-containing lithium transition metal oxide. As the compound other than the nickel-containing lithium transition metal oxide, for example, $LiM1O_2$ having a layered rock salt structure, $LiM2_2O_4$ having a spinel structure, or $LIM3(XO_4)$ having an olivine structure (M1, M2 and M3 are respectively at least one element selected from transition metal elements excluding nickel, and X is at least one element selected from among P, B and Si) can be used.

Herein, the average particle size of the positive active material is a particle size at which the cumulative percentage in the particle size distribution on the volumetric basis is 50% (D50). Specifically, a particle size distribution analyzer (SALD-2000J, manufactured by SHIMADZU CORPORATION) of laser diffraction-scattering type is used for the measurement of the particle size distribution. Further, in preparation of the measurement, an X-axis and a Y-axis of a laser section of the measurement apparatus are adjusted, and centering of a detector is carried out. The positive active material as prepared above is adequately kneaded with an anionic surfactant predominantly composed of linear sodium alkylbenzene sulfonate, and then ion-exchange water is added to prepare a measurement sample. In the measurement of the measurement sample, blank measurement is performed in a state in which only a dispersion solvent (water in the present example) is circulated through a measurement section to acquire background data. Next, the measurement sample is charged into the measurement section of the measurement apparatus, and the sample is irradiated with ultrasonic waves for 15 minutes in the measurement section. After the irradiation with ultrasonic waves, the particle size

of the measurement sample is measured two times, and the mean value of the two measurements is obtained as a measurement result. The measurement result is acquired as a particle size distribution histogram and a D50 value (D50 is the particle size at which the cumulative volume in the particle size distribution of particles reaches 50%).

The conducting agent is not particularly limited, and examples thereof include natural graphite (scaly graphite, flaky graphite, earthy graphite, etc.), artificial graphite, amorphous carbon (carbon black, acetylene black, Ketjen black, etc.), carbon whiskers, carbon fibers, conductive ceramics and the like. As the conducting agent, for example, one of the above materials or a mixture of two or more of the above materials is employed.

The binder is not particularly limited, and examples thereof include thermoplastic resins such as polytetrafluoroethylene (PTFE), polyvinylidene fluoride (PVDF), polyethylene and polypropylene; styrene-butadiene rubber (SBR); and fluororubber. As the binder, for example, one of the above materials or a mixture of two or more of the above materials is employed.

The thickener is not particularly limited, and examples thereof include polysaccharides such as carboxymethyl cellulose and methyl cellulose. As the thickener, for example, one of the above materials or a mixture of two or more of the above materials is employed.

The filler is not particularly limited, and examples thereof include olefin-based polymers such as polypropylene and polyethylene; amorphous silica, alumina, zeolite, glass and the like.

Examples of the negative active material contained in the negative electrode include graphite, amorphous carbon such as non-graphitizable carbon (hard carbon), easily graphitizable carbon (soft carbon) and coke, lithium metal, alloys capable of absorbing and releasing lithium ions (lithium alloys, etc.), metal oxides represented by the general formula $AO_z$ (A represents at least one element selected from among W, Mo, Si, Cu and Sn, and z is a numerical value in the range of $0 < z \leq 2$), lithium metal oxides ($Li_4Ti_5O_{12}$, etc.), polyphosphate compounds and the like.

The nonaqueous electrolyte secondary battery usually further includes a separator disposed between the positive electrode and the negative electrode. The nonaqueous electrolyte secondary battery usually further includes a casing body with which the positive electrode, the negative electrode, and the electrolyte are packaged. Examples of the separator include separators formed of a porous membrane, a nonwoven fabric or the like. The separator is formed of, for example, a porous membrane or a nonwoven fabric alone, or a combination of these.

Examples of materials of the separator include polyolefin-based resins such as polyethylene and polypropylene; polyester-based resins such as polyethylene terephthalate and polybutylene terephthalate; fluororesins; and the like. Examples of the fluororesins include polyvinylidene fluoride, vinylidene fluoride-hexafluoropropylene copolymers, vinylidene fluoride-perfluorovinyl ether copolymers, and the like.

Examples of the material of the casing body include iron plated with nickel, stainless steel, aluminum, a metal-resin composite film, glass and the like.

The type of the nonaqueous electrolyte secondary battery is not particularly limited, and examples thereof include coin batteries, button batteries, prismatic batteries, flat type batteries, and the like, respectively including a positive electrode, a negative electrode and a single-layer or multi-layer separator. Further, examples thereof also include cylindrical batteries having a positive electrode, a negative electrode and a separator, which are all roll-shaped.

The nonaqueous electrolyte secondary battery of the present embodiment can be prepared by a common method that is conventionally known. In the preparation of the nonaqueous electrolyte secondary battery, the positive electrode or the negative electrode is prepared, for example, in the following manner. That is, the positive active material or the negative active material, the conducting agent, the binder or the thickener are added to a solvent in which the binder and the thickener can be dissolved or dispersed, and the resulting solution or dispersion is mixed to give a slurry. The slurry is applied to both surfaces of a sheet-shaped positive current collector and dried to prepare a positive electrode or a negative electrode. In the above-mentioned mixing, a method of mixing by use of a powder mixer such as a V-shaped mixer, an S-shaped mixer, a grinding mixer, a ball mill, or a planetary ball mill can be employed. As the mixing method, a method of dry- or wet-mixing can be employed. In order to apply a slurry to the current collector, an application method such as roller coating with an applicator roll or the like, screen coating, blade coating, spin coating or bar coating can be employed. Then, the positive electrode and the negative electrode are layered or wound with the separator interposed therebetween to form an electrode element, the element is encapsulated in a casing material, an electrolyte solution is injected into the casing material, and the casing material is sealed to prepare a nonaqueous electrolyte secondary battery.

## EXAMPLES

Next, the present invention will be described in more detail by way of examples; however, the present invention is not limited to these examples.

Reference example 1

A lithium ion secondary battery as a nonaqueous electrolyte secondary battery was prepared by the method of (1) to (4) described below.

(1) Preparation of Positive Electrode

A manganese sulfate hydrate, a nickel sulfate hydrate and a cobalt sulfate hydrate were dissolved in ion-exchange water so that the ratio among the manganese element, the nickel element and the cobalt element became 1 : 1 : 1 to prepare a mixed solution. The mixed solution was prepared in such a way that the concentration and the volume of the mixed solution were 0.667 M and 180 ml, respectively. Next, 600 ml of ion-exchange water was prepared in a 1 liter beaker, and an alkaline solution, whose pH was adjusted to 11.5 by adding dropwise 8 N NaOH, was prepared. The temperature of the beaker was adjusted to 50°C, and the alkaline solution was bubbled with an Ar gas. Thereafter, the mixed solution was added dropwise to the alkaline solution at a rate of 3 ml/min while the temperature and the pH of the alkaline solution were retained. Simultaneously, 50 ml of a 2.0 M aqueous hydrazine solution was added dropwise at a rate of 0.83 ml/min as a reducing agent. After the completion of addition of both the solutions, the resulting mixed solution was kept still for 12 hours or more to give a coprecipitated precursor. The obtained coprecipitated precursor and lithium hydroxide were mixed in a predetermined proportion, and the resulting mixed powder was fired at 1000°C for 12 hours under ordinary pressure in an air atmosphere, cooled in the air, pulverized and classified to give positive active material particles having an average particle size of 3.0 μm. Then, in order to prepare a positive composite, 5 parts by mass of polyvinylidene fluoride as a binder, 5 parts by mass of acetylene black as a conducting agent, and 90 parts by mass of the above-mentioned particles as a positive active material were mixed, and an organic solvent (N-methyl-2-pyrrolidone) was added thereto to prepare a positive electrode slurry. The positive electrode slurry was applied to both surfaces of an aluminum foil (positive current collector) having a thickness of 20 μm, and dried to remove N-methyl-2-pyrrolidone, and thereby, a positive electrode was prepared.

(2) Preparation of Negative Electrode

First, 92 parts by mass of non-graphitizable carbon as a negative active material and 8 parts by mass of polyvinylidene fluoride as a binder were mixed, and an organic solvent (N-methyl-2-pyrrolidone) was added thereto to prepare a negative electrode slurry. Thereafter, the negative electrode slurry was applied to both surfaces of a copper foil (negative current collector) having a thickness of 10 μm, and dried to remove N-methyl-2-pyrrolidone, and thereby, a negative electrode was prepared.

(3) Preparation of Electrolyte

As the electrolyte, an electrolyte prepared by the following method was used. That is, in a mixed solvent of ethylene carbonate (EC), dimethyl carbonate (DMC) and ethylmethyl carbonate (EMC) in proportions of 3 : 3 : 4 (by volume), $LiPF_6$ was dissolved so that the final concentration became 1 mol/L. Moreover, a cyclic sulfate compound represented by the formula (6) was added to the mixed solvent so that its amount was 1.0% by mass with respect to the total mass of the electrolyte to prepare an electrolyte.

(4)Assembling of Battery

Using the positive electrode, the negative electrode, the electrolyte, a separator (microporous membrane made of polyethylene) and a casing material, a nonaqueous electrolyte secondary battery of Example 1 was prepared by a common method. That is, a laminated product formed by disposing the separator between the positive electrode and the negative electrode was wound, and the wound laminated product was housed in an aluminum square container case (49.3 mm high, 33.7 mm wide and 5.17 mm thick) serving as a casing material. Then, the electrolyte was injected into the casing material, and an opening of the casing material was sealed to prepare a battery. Thereby, a nonaqueous electrolyte secondary battery having a design capacity of 450 mAh was prepared.

(Reference examples 1-14, examples 15 and 16 and Comparative Examples 1 to 10)

Each lithium ion secondary battery was prepared in the same manner as in Example 1 except that the kind of the positive active material, the average particle size of the positive active material, the kind of the cyclic sulfate compound, or the concentration of the cyclic sulfate compound in the electrolyte was changed as shown in Table 1. In Comparative Examples 1 to 4, $Li_{1.1}Mn_{1.8}Al_{0.1}O_4$ used as a positive active material in place of lithium-nickel-cobalt-manganese composite oxide was prepared by the following common synthesis method. That is, a solution formed by mixing lithium hydroxide, aluminum hydroxide and $MnO_2$ at a predetermined molar ratio was dried by a spray drying method to give a precursor containing Li and Mn. The precursor was preliminarily fired at 500°C for 12 hours in the air, then fired at 750°C for 12 hours, pulverized and classified to give $Li_{1.1}Mn_{1.8}Al_{0.1}O_4$ having an average particle size of 15.0 μm. The positive active materials used in Examples 2 to 16 and Comparative Examples 5 to 10 were synthesized by the same method as in Example 1 except that the mixing ratio among lithium hydroxide, the manganese sulfate hydrate, the nickel sulfate hydrate and the cobalt sulfate hydrate as raw materials was changed. Further, as the cyclic sulfate compound in Comparative Examples 9 and 10, 4-propyl-1,3,2-dioxathiolane 2,2-dioxide (PEGS) was used.

The detailed constitutions of the lithium ion secondary batteries prepared in the examples and comparative examples are shown in Table 1. Examples 15 and 16 are according to the invention and examples 1-14 in the table are reference examples.

[Table 1]

| | Positive active material | Average particle size of positive active material (μm) | Cyclic sulfate compound | Additive amount of cyclic sulfate compound (mass%) | Increase rate of direct-current resistance value at -20°C (%) |
|---|---|---|---|---|---|
| Comparative Example 1 | $Li_{1.1}Mn_{1.8}Al_{0.1}O_4$ | 15.0 | compound of formula (6) | 1.0 | 34 |
| Comparative Example 2 | $Li_{1.1}Mn_{1.8}Al_{0.1}O_4$ | 15.0 | compound of formula (8) | 1.0 | 40 |
| Comparative Example 3 | $Li_{1.1}Mn_{1.8}Al_{0.1}O_4$ | 15.0 | compound of formula (7) | 1.0 | 38 |
| Comparative Example 4 | $Li_{1.1}Mn_{1.8}Al_{0.1}O_4$ | 15.0 | compound of formula (9) | 1.0 | 44 |
| Comparative Example 5 | $LiCoO_2$ | 6.0 | compound of formula (6) | 1.0 | 26 |
| Comparative Example 6 | $LiNi_{0.33}Co_{0.33}Mn_{0.33}O_2$ | 2.0 | compound of formula (6) | 1.0 | 26 |
| Example 1 | $LiNi_{0.33}Co_{0.33}Mn_{0.33}O_2$ | 3.0 | compound of formula (6) | 1.0 | 13 |
| Example 2 | $LiNi_{0.33}Co_{0.33}Mn_{0.33}O_2$ | 6.0 | compound of formula (6) | 1.0 | 7 |
| Example 3 | $LiNi_{0.33}Co_{0.33}Mn_{0.33}O_2$ | 12.0 | compound of formula (6) | 1.0 | 8 |
| Example 4 | $LiNi_{0.33}Co_{0.33}Mn_{0.33}O_2$ | 15.0 | compound of formula (6) | 1.0 | 11 |
| Comparative Example 7 | $LiNi_{0.33}Co_{0.33}Mn_{0.33}O_2$ | 18.0 | compound of formula (6) | 1.0 | 25 |

(continued)

| | Positive active material | Average particle size of positive active material (μm) | Cyclic sulfate compound | Additive amount of cyclic sulfate compound (mass%) | Increase rate of direct-current resistance value at -20°C (%) |
|---|---|---|---|---|---|
| Comparative Example 8 | $LiNi_{0.33}Co_{0.33}Mn_{0.33}O_2$ | 6.0 | none | - | 32 |
| Example 5 | $LiNi_{0.33}Co_{0.33}Mn_{0.33}O_2$ | 6.0 | compound of formula (6) | 0.1 | 18 |
| Example 6 | $LiNi_{0.33}Co_{0.33}Mn_{0.33}O_2$ | 6.0 | compound of formula (6) | 0.2 | 14 |
| Example 7 | $LiNi_{0.33}Co_{0.33}Mn_{0.33}O_2$ | 6.0 | compound of formula (6) | 2.0 | 10 |
| Example 8 | $LiNi_{0.33}Co_{0.33}Mn_{0.33}O_2$ | 6.0 | compound of formula (6) | 3.0 | 19 |
| Example 9 | $LiNiMnO_4$ | 15.0 | compound of formula (6) | 1.0 | 21 |
| Example 10 | $LiNi_{0.8}Co_{0.15}Al_{0.05}O_2$ | 6.0 | compound of formula (6) | 1.0 | 20 |
| Example 11 | $LiNi_{0.165}Co_{0.67}Mn_{0.165}O_2$ | 6.0 | compound of formula (6) | 1.0 | 9 |
| Example 12 | $LiNi_{0.5}Co_{0.2}Mn_{0.3}O_2$ | 6.0 | compound of formula (6) | 1.0 | 15 |
| Example 13 | $LiNi_{0.6}Co_{0.2}Mn_{0.2}O_2$ | 6.0 | compound of formula (6) | 1.0 | 18 |
| Example 14 | $LiNi_{0.33}Co_{0.33}Mn_{0.33}O_2$ | 6.0 | compound of formula (8) | 1.0 | 10 |
| Example 15 | $LiNi_{0.33}Co_{0.33}Mn_{0.33}O_2$ | 6.0 | compound of formula (7) | 1.0 | 12 |
| Example 16 | $LiNi_{0.33}Co_{0.33}Mn_{0.33}O_2$ | 6.0 | compound of formula (9) | 1.0 | 11 |
| Comparative Example 9 | $LiNi_{0.33}Co_{0.33}Mn_{0.33}O_2$ | 6.0 | PEGS | 1.0 | 27 |
| Comparative Example 10 | $LiNi_{0.33}Co_{0.33}Mn_{0.33}O_2$ | 6.0 | PEGS | 3.0 | 29 |

A storage test was carried out at 65°C on each of batteries of the examples and comparative examples, and

the direct-current resistance value at -20°C of each battery was measured before and after the storage test. From the measured values, the increase rate of the direct-current resistance value at -20°C of each battery measured before and after the storage test was calculated. The results are shown in Table 1. The measurement test of the direct-current resistance value and the storage test at 65°C were carried out as follows.

<Measurement Test of Direct-Current Resistance Value>

Each battery was charged at a current of 90 mA at 25°C for 2.5 hours to set the charged state of the battery to nearly 50%. The charged battery was maintained at -20°C for 5 hours, and then the voltage (E1) at the time of discharging at 90 mA (I1) for 10 seconds, and the voltage (E2) at the time of discharging at 225 mA (I2) for 10 seconds were measured. Using these measurements, the direct-current resistance value (Rx) at -20°C was calculated from the following equation.

$$Rx = (E1 - E2)/\text{Discharge current } (I2 - I1)$$

<Storage Test at 65°C>

Each battery subjected to the measurement test of the direct-current resistance value was charged at a current of 90 mA at 25°C for 1 hour to set the charged state of the battery to nearly 20%, and the charged battery was stored for 60 days in a constant-temperature bath at 65°C. The stored battery was maintained at 25°C for 5 hours, and then discharged at a current of 90 mA to 2.5 V at 25°C. The direct-current resistance value of the discharged battery was measured by the above-mentioned method.

As can be understood from Table 1, the batteries of the examples, when used, were suppressed in the increase rate of the direct-current resistance at -20°C when being left in a state of low charge (a state of being charged to nearly 20%) under a relatively high temperature environment (65°C). Further, when the electrolyte contained the cyclic sulfate compound represented by the general formula (1) in an amount of 0.2 to 2.0% by mass, an increase of the direct-current resistance of the battery measured at -20°C after being left in a state of low charge under a relatively high temperature environment was suppressed more greatly.

## Claims

1. A nonaqueous electrolyte secondary battery comprising a positive electrode having a particulate positive active material, and an electrolyte, wherein the positive active material contains a nickel-containing lithium transition metal oxide and has an average particle size of 3 to 15 μm, **characterized in that** the electrolyte contains a cyclic sulfate compound represented by the following general formula (1):

[Chem. 1]

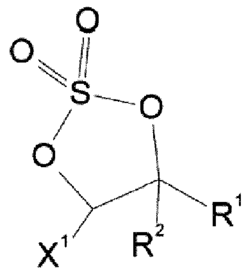

General Formula (1)

[Chem. 2]

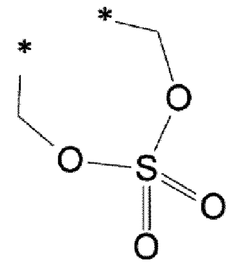

Formula (2)

[Chem. 3]

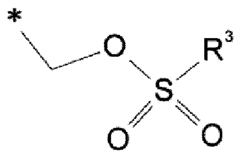

General Formula (3)

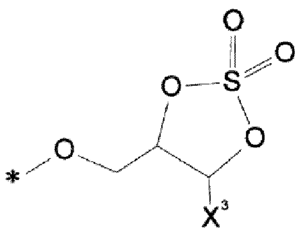

General Formula (5)

wherein $R^1$ and $R^2$ in the general formula (1) respectively represent groups represented by the formula (2) that are linked with each other, or either of $R^1$ and $R^2$ represents a hydrogen atom and the other represents a group represented by the general formula (3), or the general formula (5);
in the general formula (3), $R^3$ represents a group represented by the general formula (5); portions of symbol * in the formula (2), the general formula (3), and the general formula (5) represent a bonding position; and
$X^1$, $X^2$, and $X^3$ in the general formula (1), and the general formula (5) each independently represent a hydrogen atom or a halogen element.

2. The nonaqueous electrolyte secondary battery according to claim 1, wherein the nickel-containing lithium transition metal oxide contains cobalt and manganese.

3. The nonaqueous electrolyte secondary battery according to claim 1 or 2, wherein the nickel content in the nickel-containing lithium transition metal oxide is 50% by mole or less with respect to all the transition metals.

4. The nonaqueous electrolyte secondary battery according to any one of claims 1 to 3, wherein the electrolyte contains at least one cyclic sulfate compound selected from the group consisting of the following formula (7), and formula (9):

[Chem. 5]

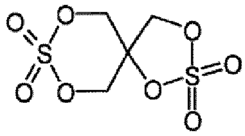

Formula (7)

[Chem. 6]

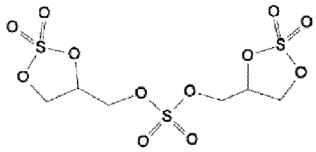

Formula (9)

.

5. The nonaqueous electrolyte secondary battery according to claim 4, wherein the electrolyte contains the cyclic sulfate compound of formula (7):

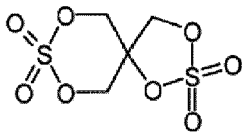

Formula (7)

6. A method for producing a nonaqueous electrolyte secondary battery comprising a positive electrode having a particulate positive active material, and an electrolyte, wherein the positive active material contains a nickel-containing lithium transition metal oxide and has an average particle size of 3 to 15 μm, **characterized in that** the electrolyte contains a cyclic sulfate compound represented by the general formula (1) in an amount of 0.1 to 3.0% by mass with respect to the total mass of the electrolyte

[Chem. 1]

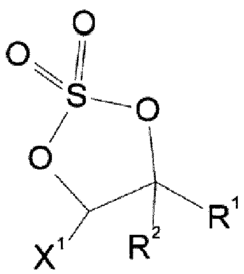

General Formula (1)

[Chem. 2]

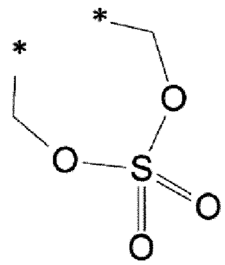

Formula (2)

[Chem. 3]

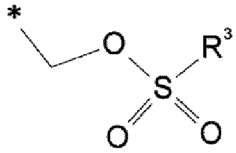

General Formula (3)

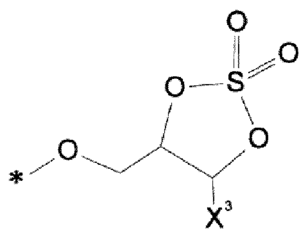

General Formula (5)

wherein $R^1$ and $R^2$ in the general formula (1) respectively represent groups represented by the formula (2) that are linked with each other, or either of $R^1$ and $R^2$ represents a hydrogen atom and the other represents a group represented by the general formula (3), or the general formula (5);
in the general formula (3), $R^3$ represents a group represented by the general formula (5); portions of symbol * in the formula (2), the general formula (3), and the general formula (5) represent a bonding position; and $X^1$, $X^2$, and $X^3$ in the general formula (1), and the general formula (5) each independently represent a hydrogen atom or a halogen element.

## Patentansprüche

1. Nichtwässriger Elektrolyt für eine Akkumulatorbatterie, umfassend eine positive Elektrode mit einem teilchenförmigen positiven aktiven Material, und einen Elektrolyten, wobei das positive aktive Material ein Nickel enthaltendes Lithiumübergangsmetalloxid enthält und einen mittleren Teilchendurchmesser von 3 bis 15 μm besitzt, **dadurch gekennzeichnet, dass** der Elektrolyt eine zyklische Sulfatverbindung enthält, dargestellt durch die nachfolgende allgemeine Formel (1):

[Chem. 1]

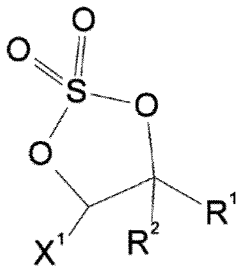

Allgemeine Formel (1)

[Chem. 2]

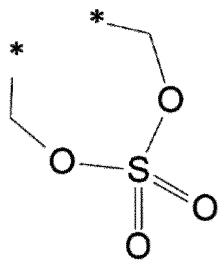

Formel (2)

[Chem. 3]

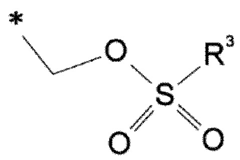

Allgemeine Formel (3)

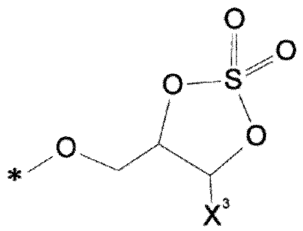

Allgemeine Formel (5)

wobei $R^1$ und $R^2$ in der allgemeinen Formel (1) jeweils Gruppen darstellen, die durch die Formel (2) dargestellt sind, die miteinander verbunden sind, oder entweder $R^1$ und $R^2$ ein Wasserstoffatom darstellt und die andere eine Gruppe darstellt, dargestellt durch die allgemeine Formel (3), oder die allgemeine Formel (5);
in der allgemeinen Formel (3), $R^3$ eine Gruppe darstellt, dargestellt durch die allgemeine Formel (5); Teile mit dem Symbol * in der Formel (2), die allgemeine Formel (3), und die allgemeine Formel (5) eine Bindungsposition darstellen; und
$X^1$, $X^2$, und $X^3$ in der allgemeinen Formel (1), und die allgemeine Formel (5) jeweils unabhängig voneinander ein Wasserstoffatom oder ein Halogenelement darstellen.

2. Nichtwässriger Elektrolyt für eine Akkumulatorbatterie nach Anspruch 1, wobei das Nickel enthaltende Lithiumübergangsmetalloxid Cobalt und Mangan enthält.

3. Nichtwässriger Elektrolyt für eine Akkumulatorbatterie nach Anspruch 1 oder 2, wobei der Nickelgehalt im Nickel enthaltenden Lithiumübergangsmetalloxid 50 Mol.-% oder darunter in Bezug auf alle Übergangsmetalle ist.

4. Nichtwässriger Elektrolyt für eine Akkumulatorbatterie nach einem der Ansprüche 1-3, wobei der Elektrolyt wenigstens eine zyklische Sulfatverbindung enthält, ausgewählt aus der Gruppe, bestehend aus den nachfolgenden Verbindungen der Formel (7) und der Formel (9):

[Chem. 5]

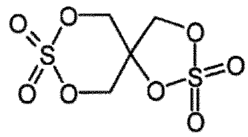

Formel (7)

[Chem. 6]

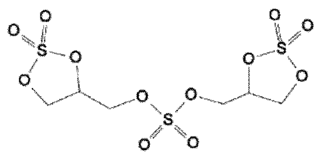

Formel (9).

5. Nichtwässriger Elektrolyt für eine Akkumulatorbatterie nach Anspruch 4, wobei der Elektrolyt die zyklische Sulfatverbindung nach Formel (7) enthält:

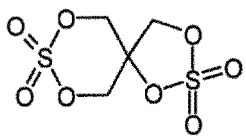

Formel (7)

6. Verfahren zur Herstellung eines nichtwässrigen Elektrolyten für eine Akkumulatorbatterie, umfassend eine positive Elektrode mit einem teilchenförmigen positiven aktiven Material, und einen Elektrolyten, wobei das positive aktive Material ein Nickel enthaltendes Lithiumübergangsmetalloxid enthält und eine mittlere Teilchengröße von 3-15 μm aufweist, **dadurch gekennzeichnet, dass** der Elektrolyt eine zyklische Sulfatverbindung enthält, dargestellt durch die allgemeine Formel (1), in einer Menge von 0,1 bis 3,0 Massenprozent in Bezug auf die Gesamtmasse des Elektrolyten

[Chem. 1]

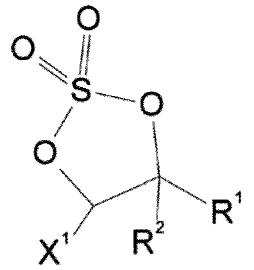

Allgemeine Formel (1)

[Chem. 2]

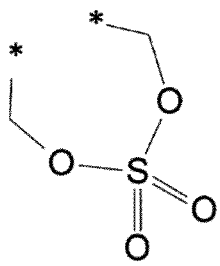

Formel (2)

[Chem. 3]

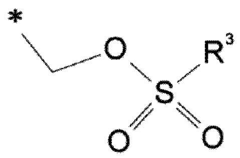

Allgemeine Formel (3)

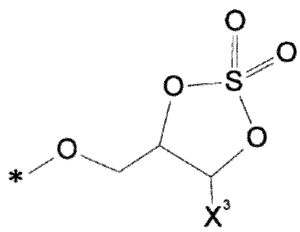

Allgemeine Formel (5)

wobei $R^1$ und $R^2$ in der allgemeinen Formel (1) jeweils Gruppen darstellen, dargestellt durch die Formel (2), die miteinander verbunden sind, und entweder $R^1$ und $R^2$ ein Wasserstoffatom darstellt und der andere Rest eine Gruppe darstellt, dargestellt durch die allgemeine Formel (3) oder die allgemeine Formel (5);
in der allgemeinen Formel (3), $R^3$ eine Gruppe darstellt, dargestellt durch die allgemeine Formel (5); Teile mit dem Symbol * in der Formel (2), die allgemeine Formel (3), und die allgemeine Formel (5) eine Bindungsposition darstellt; und
$X^1$, $X^2$, und $X^3$ in der allgemeinen Formel (1), und die allgemeine Formel (5) jeweils unabhängig voneinander ein Wasserstoffatom oder ein Halogenatom ist.

**Revendications**

**1.** Batterie rechargeable à électrolyte non aqueux comprenant une électrode positive ayant un matériau actif particulaire positif, et un électrolyte, dans laquelle le matériau actif positif contient un oxyde de métal de transition au lithium contenant du nickel et a un diamètre de particule moyen de 3 à 15 μm, **caractérisée en ce que** l'électrolyte contient un composé de sulfate cyclique représenté par la formule générale suivante (1) :

[Chem. 1]

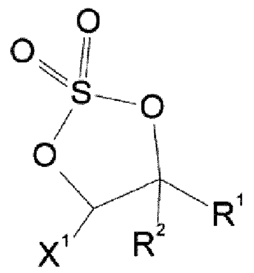

Formule générale (1)

[Chem. 2]

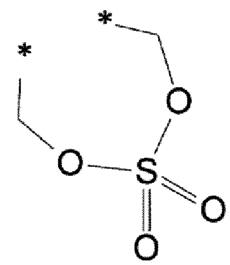

Formule (2)

[Chem. 3]

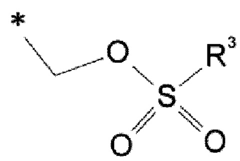

Formule générale (3)

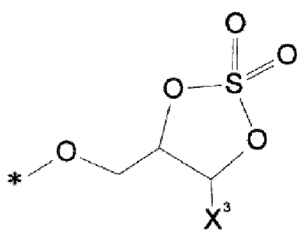

Formule générale (5)

dans laquelle les radicaux $R^1$ et $R^2$ dans la formule générale (1) représentent respectivement des groupements représentés par la formule (2) qui sont liés l'un à l'autre, ou l'un des radicaux parmi $R^1$ et $R^2$ représente un atome d'hydrogène et l'autre représente un groupement représenté par la formule générale (3), ou la formule générale (5) ;

dans la formule générale (3), le radical $R^3$ représente un groupement représenté par la formule générale (5) ; les parties avec le symbole * dans la formule (2), la formule générale (3), et la formule générale (5) représentent un emplacement de liaison ; et
les radicaux $X^1$, $X^2$, and $X^3$ dans la formule générale (1) et dans la formule générale (5) représentent chacun indépendamment un atome d'hydrogène ou un élément halogène.

**2.** Batterie rechargeable à électrolyte non aqueux selon la revendication 1, dans laquelle l'oxyde de métal de transition au lithium contenant du nickel contient du cobalt et du manganèse.

**3.** Batterie rechargeable à électrolyte non aqueux selon la revendication 1 ou 2, dans laquelle le contenu en nickel dans l'oxyde de métal de transition au lithium contenant du nickel représente 50 % en moles ou moins par rapport à tous les métaux de transition.

**4.** Batterie rechargeable à électrolyte non aqueux selon l'une quelconque des revendications 1 à 3, dans laquelle l'électrolyte contient au moins un composé de sulfate cyclique choisi dans le groupe constitué par la formule (7) suivante et la formule (9) :

[Chem. 5]

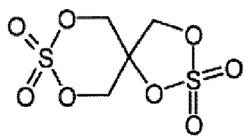

Formule (7)

[Chem. 6]

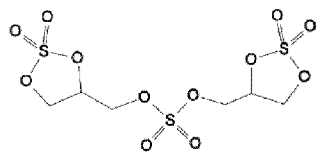

Formule (9)

.

**5.** Batterie rechargeable à électrolyte non aqueux selon la revendication 4, dans laquelle l'électrolyte contient le composé de sulfate cyclique selon la formule (7) :

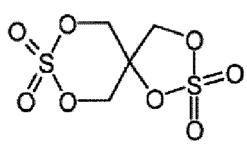

Formule (7)

**6.** Procédé de fabrication d'une batterie rechargeable à électrolyte non aqueux comprenant une électrode positive ayant un matériau actif particulaire positif, et un électrolyte, dans lequel le matériau actif positif contient un oxyde de métal de transition au lithium contenant du nickel et a un diamètre de particule moyen de 3 à 15 μm, **caractérisé en ce que** l'électrolyte contient un composé de sulfate cyclique représenté par la formule générale (1) dans une quantité de 0,1 à 3,0 % en poids par rapport au poids total de l'électrolyte

[Chem. 1]

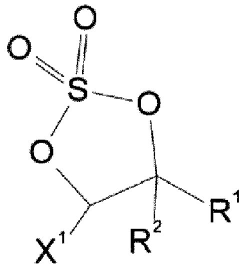

Formule générale (1)

[Chem. 2]

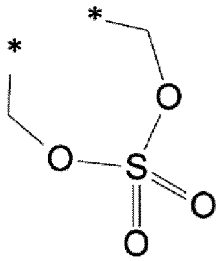

Formule (2)

[Chem. 3]

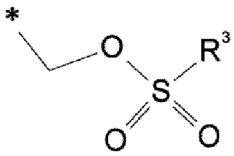

Formule générale (3)

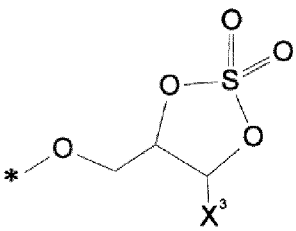

Formule générale (5)

dans laquelle les radicaux $R^1$ et $R^2$ de la formule générale (1) représentent respectivement des groupements représentés par la formule (2) qui sont liés l'un à l'autre, ou l'un des radicaux parmi $R^1$ et $R^2$ représente un atome d'hydrogène et l'autre représente un groupement représenté par la formule générale (3) ou la formule générale (5) ;

dans la formule générale (3), le radical $R^3$ représente un groupement représenté par la formule générale (5) ;

les parties avec le symbole * dans la formule (2), la formule générale (3), et la formule générale (5) représentent un emplacement de liaison ; et

les radicaux $X^1$, $X^2$, et $X^3$ dans la formule générale (1) et dans la formule générale (5) représentent chacun

indépendamment un atome d’hydrogène ou un élément halogène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012053644 A
- EP 1391950 A